Europäisches Patentamt

European Patent Office

Office européen des brevets

(19)

(11) EP 0 476 764 B1

(12) FASCICULE DE BREVET EUROPEEN

(45) Date de publication et mention
de la délivrance du brevet:
**24.02.1999 Bulletin 1999/08**

(51) Int Cl.6: **H04B 7/005**

(21) Numéro de dépôt: **91202342.1**

(22) Date de dépôt: **12.09.1991**

(54) **Dispositif d'égalisation de spectre**

Gerät zur spektralen Entzerrung

Spectrum equalizing device

(84) Etats contractants désignés:
**DE FR GB IT SE**

(30) Priorité: **18.09.1990 FR 9011492**

(43) Date de publication de la demande:
**25.03.1992 Bulletin 1992/13**

(73) Titulaires:
• **TRT LUCENT TECHNOLOGIES**
**75008 Paris (FR)**
Etats contractants désignés:
**FR**
• **LUCENT TECHNOLOGIES INC.**
**Murray Hill, New Jersey 07974-0636 (US)**
Etats contractants désignés:
**DE GB IT SE**

(72) Inventeur: **Marchand, Philippe**
**F-75008 Paris (FR)**

(74) Mandataire: **Schmit, Christian Norbert Marie et al**
**Cabinet Ballot-Schmit**
**7, rue Le Sueur**
**75116 Paris (FR)**

(56) Documents cités:
**DE-A- 1 787 007**          **FR-A- 1 589 082**
**US-A- 4 258 340**

• **PATENT ABSTRACTS OF JAPAN, vol. 9, no. 102**
**(E-312)[1825], 4 mai 1985; & JP-A-59 229 901**
**(MITSUBISHI) 24-12-1984**

## Description

La présente invention concerne un dispositif d'égalisation comportant une entrée pour un signal à égaliser, une sortie pour fournir un signal égalisé, une cascade de correction reliant ladite entrée avec ladite sortie, cascade formée d'au moins deux cellules de correction montées en cascade, qui sont constituées à partir d'un circuit de couplage et qui sont munies chacune d'une borne de commande pour recevoir une information de commande déterminant la correction à apporter et émanant d'un circuit de mesure d'égalisation destiné à mesurer l'égalisation apportée par le dispositif.

De tels dispositifs sont bien connus et trouvent d'importantes applications notamment dans la transmission de données numériques par voie hertzienne.

On sait que les liaisons hertziennes sont sujettes au phénomène de chemins multiples dûs à des réflexions de l'onde hertzienne sur différents obstacles, notamment le sol.

Ces chemins multiples détériorent le spectre de l'onde émise. Pour éviter cette détérioration on inclut dans le récepteur des cellules qui présentent des fonctions de transfert inverses qui se rapprochent de la propagation. On pourra, à ce sujet, consulter le brevet des Etats-Unis d'Amérique US-A-4 258 340. Le préambule de la présente revendication 1 est dérivé de ce brevet.

Dans ce brevet cité, on utilise un premier circuit de branchement pour séparer en deux voies le signal à égaliser et l'on prévoit des corrections qui peuvent être insérées dans chacune de ces voies. Un deuxième circuit de combinaison est nécessaire pour fournir le signal égalisé en combinant les signaux issus de ces deux voies.

Il est connu du document de brevet japonais JP-A-59 229 901 un circuit égaliseur utilisant un circuit hybride. Pour ajuster l'égalisation, ce circuit comporte des lignes de transmission dont on ajuste les longueurs, ce qui ne permet pas d'obtenir une égalisation automatique, d'une manière aisée.

La présente invention propose un dispositif de ce genre, qui présente une structure bien plus simple que celle décrite dans les documents précités, tout en ayant des performances comparables et présentant une bonne aptitude à être facilement commandable.

Pour cela, un tel dispositif est remarquable en ce que les circuits de couplage sont constitués par des circuits hybrides, en ce qu'une première des cellules, dite à phase minimale, a une fonction de transfert $H_m(\omega)$ telle que :

$$H_m(\omega) = 1 + \rho\, e^{-j\omega\tau}$$

où

$\rho$ est un coefficient de réflexion variable,

$\tau$ est un retard fixe,

et $\omega$ représente la fréquence,

chaque circuit de couplage comportant un accès d'entrée et un accès de sortie pour le signal à corriger et le signal corrigé respectivement, en ce que la première cellule comporte, inséré dans un premier accès auxiliaire d'un premier circuit hybride, un premier circuit réflectif fixe formé d'un premier circuit miroir présentant un coefficient de réflexion fixe $\Gamma_2 = K$ et, inséré dans un deuxième accès auxiliaire dudit premier circuit hybride, un deuxième circuit réflectif formé d'une première ligne à retard et d'un premier circuit de désadaptation connectés en série, ledit deuxième circuit réflectif présentant une réflexion variable $\Gamma_4$ en fonction de l'information de commande :

$$\Gamma_4 = \frac{R(Vd) - Z_0}{R(Vd) + Z_0}\, e^{-j\omega\tau}$$

à partir de laquelle le coefficient de réflexion variable est établi, où

R(Vd) est une résistance variable en fonction de Vd qui représente l'information de commande, et

$Z_0$ est l'impédance caractéristique du milieu de propagation des signaux à corriger,

$\tau$ est ledit retard fixe qui équivaut au double du retard apporté par la première ligne à retard,

en ce que l'accès de sortie de ladite première cellule est prévu pour recevoir la superposition des ondes réfléchies par le premier et le deuxième circuit réflectif de la première cellule,

en ce qu'une deuxième des cellules de correction, dite à phase non minimale, a une fonction de transfert $H_{nm}(\omega)$ telle que :

$$H_{nm}(\omega) = \rho + e^{-j\omega\tau}$$

et en ce que la deuxième cellule de correction comporte, inséré dans un premier accès auxiliaire d'un deuxième circuit hybride, un troisième circuit réflectif formé d'un deuxième circuit de désadaptation présentant une réflexion variable $\Gamma_2'$ :

$$\Gamma_2' = \frac{R(Vd)-Z_0}{R(Vd)+Z_0}$$

et, inséré dans un deuxième accès auxiliaire du deuxième circuit hybride, un quatrième circuit réflectif formé d'une deuxième ligne à retard et d'un deuxième circuit miroir connectés en série, ledit quatrième circuit réflectif présentant une réflexion fixe $\Gamma_4'$ :

$$\Gamma_4' \ -e^{-j\omega\tau}$$

à partir de laquelle le coefficient de réflexion variable est établi.

La description suivante, accompagnée des desssins ci-annexés, le tout donné à titre d'exemple non limitatif, fera bien comprendre comment l'invention peut être réalisée.

La figure 1 représente un dispositif d'égalisation conforme à l'invention.

La figure 2 représente la variation du module de la fonction de transfert du dispositif de l'invention.

La figure 3 représente un mode de réalisation du circuit hybride.

La figure 4 représente un mode de réalisation du circuit de désadaptation.

La figure 5 représente la variation du coefficient de réflexion apportée par le circuit de désadaptation en fonction d'un paramètre R.

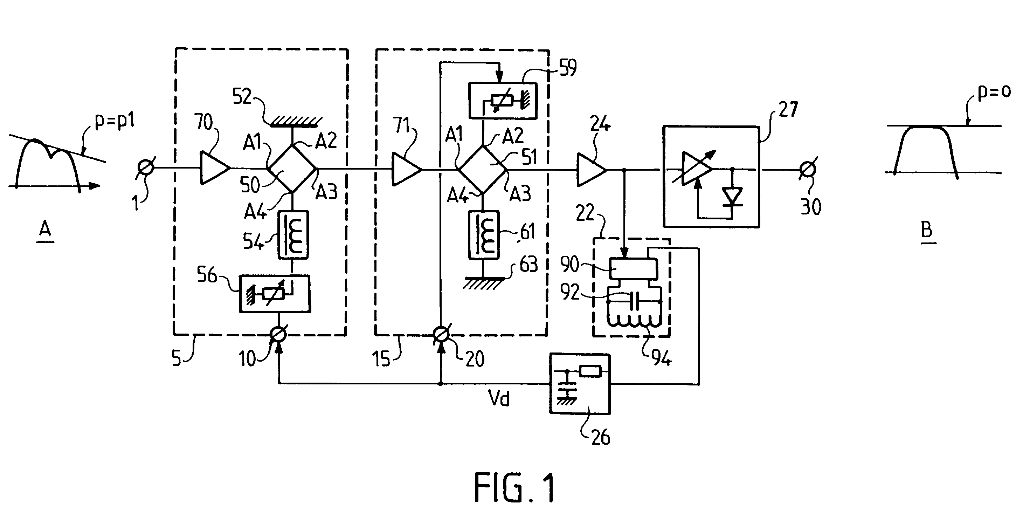

La borne 1 de la figure 1 représente la borne d'entrée pour un signal à égaliser de type numérique. A cette borne d'entrée 1 est reliée une première cellule égalisatrice 5 dite à phase minimale présentant une fonction de transfert $H_m(\omega)$ :

$$H_m(\omega) = 1 + \rho \ e^{-j\omega\tau} \qquad (1)$$

où

$\omega$ est la fréquence considérée,

$\tau$ est un retard qui sera explicité ci-dessous,

$\rho$ est le paramètre qui varie en fonction d'un signal appliqué à la borne de commande 10 de la cellule 5.

La sortie de la cellule 5 est reliée à l'entrée d'une deuxième cellule égalisatrice 15, dite à phase non minimale présentant une fonction de transfert $H_{nm}(\omega)$ :

$$H_{nm}(\omega) = \rho + e^{-j\omega\tau} \qquad (2)$$

où $\rho$ est défini par le signal appliqué à la borne de commande 20 de la cellule 15.

La fonction de transfert globale H(w) s'écrit :

$$H(\omega) = H_m(\omega).H_{nm}(\omega) = \rho + \rho^2 \ e^{-j\omega\tau} + e^{-j\omega\tau} + \rho \ e^{j\omega\tau}$$

$$= e^{-j\omega\tau} \ (1+\rho^2+2\rho \ \cos\omega\tau)$$

on constate qu'il n'y a pas de variation de temps de groupe $\Delta$tg car le temps de groupe tg est constant :

$$tg = \frac{d(\omega\tau)}{d\omega} = \tau$$

Ainsi, la transmission d'impulsions sera peu affectée par le dispositif.

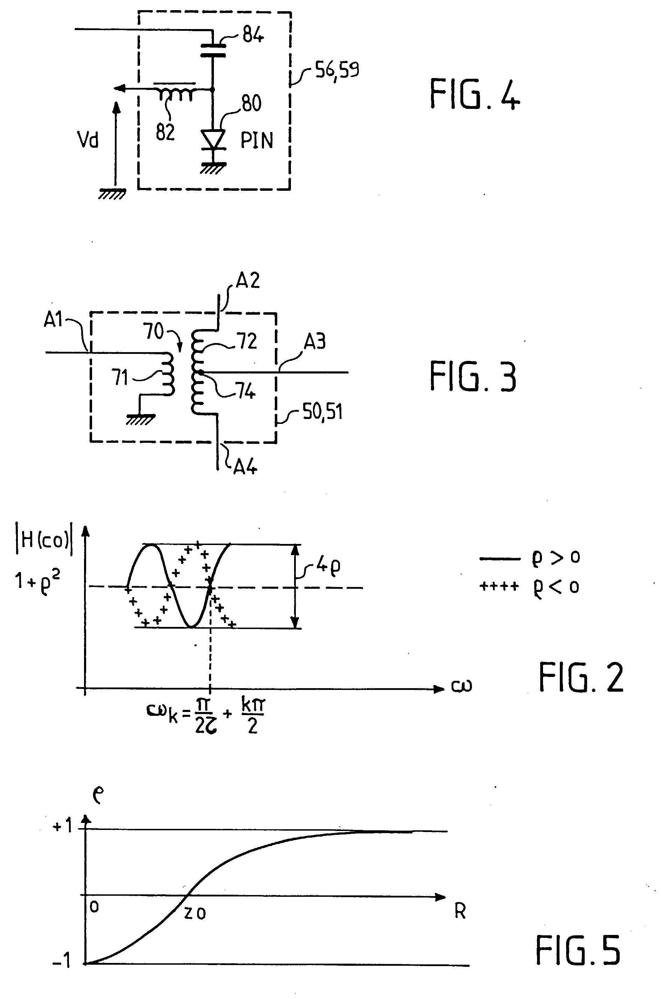

A la figure 2, on a représenté la variation de IH($\omega$)I en fonction de $\omega$ ; ces variations sont centrées autour de la droite 1+$\rho^2$ et ses amplitudes sont de 4$\rho$.

Pour une bande d'observation Aw faible devant $\pi/2$ et centrée autour de $\omega_k$ l'allure peut être approximée à un segment de droite dont la pente (positive ou négative) est fonction de $\rho$, $\omega$k étant la valeur d'$\omega$ où IH($\omega$)I coupe la droite 1+$\rho^2$.

Inversement si le signal à égaliser est centré autour de $\omega_0$, on peut choisir $\tau = \tau_k = \pi/2\omega_0 + k\pi/\omega_0$ tel que H($\omega$) satisfasse aux conditions demandées (k est un entier égal à 1, 2,...).

Pour pouvoir régler convenablement cette fonction de transfert, on a prévu un circuit de mesure de distorsion de spectre 22 connecté à la sortie de la cellule 15 par l'intermédiaire d'un amplificateur tampon 24. Le signal fourni par le circuit de mesure est appliqué aux entrées de commande 10 et 20 des cellules 5 et 15 par l'intermédiaire d'un filtre d'asservissement 26.

La sortie 30 du dispositif est reliée à la sortie de l'amplificateur 24, par l'intermédiaire d'un circuit de régulation de niveau 27 de conception classique. En $\underline{A}$ on a représenté un spectre du signal appliqué à l'entrée 1 distordu par la propagation. Sur ce signal on constate que le sommet du spectre n'est pas horizontal et présente une certaine pente p = p$_1$. Le dispositif d'égalisation va rendre cette pente égale à O p = 0 (voir en $\underline{B}$ à la figure 1) d'où le nom de "correcteur de pente" associé à ce genre de dispositif.

Pour réaliser cela, l'invention propose des cellules de correction de structure particulièrement avantageuses. Ces cellules sont constituées à partir d'un seul circuit hybride 50, 51 pour respectivement les cellules 5 et 15. Ces circuits 50 et 51 comportent respectivement des accès A1, A2, A3 et A4. Elles comportent, en outre, des circuits réflectifs connectés aux accès A2 et A4.

Le circuit réflectif connecté à l'accès A2 du circuit 50 est formé d'un miroir court-circuit 52 amenant un coefficient de réflexion -1, le circuit réflectif connecté à l'accès A4 du circuit 50 est formé d'une ligne à retard 54 et d'un circuit de désadaptation 56. Le circuit réflectif connecté à l'accès A2 du circuit 51 est formé d'un circuit de désadaptation 59 et le circuit réflectif connecté à l'accès A4 est formé d'une ligne à retard 61 et d'un miroir court-circuit 63.

Les entrées des cellules 5 et 15 sont constituées respectivement par les entrées d'amplificateur-tampon 70 et 71 dont les sorties sont reliées aux accès A1 des circuits hybrides 50 et 51 ; ces amplificateurs, non forcément nécessaires, évitent les effets des désadaptations apportées par les mesures préconisées par l'invention.

Les sorties des cellules sont constituées, elles, par respectivement, les accès A3 des circuits 50 et 51.

Le fonctionnement des cellules 5 et 15 est basé sur les considérations suivantes :

La fonction de transfert H$_{13}(\omega)$ d'un circuit hybride est égale à la différence des coefficients de réflexion $\Gamma_2$ et $\Gamma_4$ (à un coefficient multiplicatif près) apportés par les dipôles connectés aux accès A2 et A4 :

$$H_{13}(\omega) = \Gamma_4 - \Gamma_2$$

pour la cellule 5 :

$$\Gamma_4 = \frac{R(Vd)-Z_0}{R(Vd)+Z_0} \, e^{-j\omega\tau}$$

où

R(Vd) est la résistance présentée par le circuit 56,

Z$_0$ est l'impédance caractéristique du milieu de propagation des signaux.

$$\Gamma_2 = -1$$

d'où :

$$H_m = 1 + \frac{R(Vd)-Z_0}{R(Vd)+Z_0} \, e^{-j\omega\tau} \tag{3}$$

Si R(Vd) varie de 0 à l'infini, $\frac{R(Vd)-Z_0}{R(Vd)+Z_0}$ varie de -1 à +1. en combinant cette formule (3) avec (1) on a :

$$\rho = \frac{R(Vd)-Z_0}{R(Vd)+Z_0} \qquad (4)$$

pour la cellule 15 :

$$\Gamma_4' = - e^{-j\omega\tau}$$

$$\Gamma_2' = \frac{R(Vd)-Z_0}{R(Vd)+Z_0}$$

d'où

$$H_{nm} = \frac{R(Vd)-Z_0}{R(Vd)+Z_0} + e^{-j\omega\tau} \qquad (5)$$

en composant avec la formule (2) on retrouve la relation (4).

La figure 3 montre un exemple de réalisation préféré des circuits hybrides 50 et 51 convenant pour un $\omega/2\pi$ = 70 MHz.

Il est constitué à partir d'un transformateur différentiel 70 formé d'un enroulement primaire 71 et d'un enroulement secondaire 72 muni d'un point milieu. Une extrémité de l'enroulement primaire constitue l'accès A1 par rapport à la masse, une extrémité de l'enroulement secondaire, l'accès A2, l'autre extrémité, l'accès A3 et le point milieu, l'accès A4.

Le circuit de désadaptation 56, 59 montré à la figure 4 est constitué à partir d'une diode PIN 80 dont le trajet anode-cathode est polarisé par la tension Vd par l'intermédiaire d'une bobine de self induction de découplage 82. Cette diode est connectée à la ligne 54 (cellule 5) ou à l'accès A2 du circuit 15 (cellule 15) par l'intermédiaire d'un condensateur 84 de forte capacité, qui peut donc être considérée comme un court-circuit à la fréquence de travail considérée.

Si on prend une diode PIN de bonne qualité sa résistance varie de O à l'infini pratiquement ; la figure 5 donne, compte tenu de l'équation 4 la valeur de $\rho$ associé. On doit bien remarquer que cette valeur varie de $\rho = -1$ à $\rho = +1$.

On notera également que les lignes 54 et 61 travaillent en réflexion et que, pour un retard donné, leur longueur est deux fois moindre.

Selon un mode de réalisation préféré le circuit de mesure de distorsion de spectre est formé à partir d'un circuit intégré 90 destiné à opérer comme discriminateur de fréquence sur des signaux analogiques. A ce circuit est associé un circuit résonant composé d'un condensateur 92 et d'une bobine d'inductance 94. Le circuit résonant est réglé, dans le cadre de cet exemple, à 70 MHz et le circuit intégré est un circuit fabriqué par PLESSEY sous l'immatriculation SL1454.

**Revendications**

1.  Dispositif d'égalisation comportant une entrée (1) pour un signal à égaliser, une sortie (30) pour fournir un signal égalisé, une cascade de correction reliant ladite entrée avec ladite sortie, cascade formée d'au moins deux cellules de correction (5,15) montées en cascade, qui sont constituées à partir d'un circuit de couplage et qui sont munies chacune d'une borne de commande (10, 20) pour recevoir une information de commande déterminant la correction à apporter et émanant d'un circuit de mesure d'égalisation (22) destiné à mesurer l'égalisation apportée par le dispositif, dispositif caractérisé en ce que les circuits de couplage sont constitués par des circuits hybrides, en ce qu'une première des cellules (5), dite à phase minimale, a une fonction de transfert $H_m(\omega)$ telle que :

$$H_m(\omega) = 1 + \rho\, e^{-j\omega\tau}$$

où

$\rho$ est un coefficient de réflexion variable,
$\tau$ est un retard fixe,

et $\omega$ représente la fréquence,

chaque circuit de couplage comportant un accès d'entrée et un accès de sortie pour le signal à corriger et le signal corrigé respectivement, en ce que la première cellule (5) comporte, inséré dans un premier accès auxiliaire (A2) d'un premier circuit hybride (50), un premier circuit réflectif fixe (52) formé d'un premier circuit miroir présentant un coefficient de réflexion fixe $\Gamma_2 = K$ et, inséré dans un deuxième accès auxiliaire (A4) dudit premier circuit hybride (50), un deuxième circuit réflectif formé d'une première ligne à retard (54) et d'un premier circuit de désadaptation (56) connectés en série, ledit deuxième circuit réflectif présentant une réflexion variable $\Gamma_4$ en fonction de l'information de commande :

$$\Gamma_4 = \frac{R(Vd)-Z_0}{R(Vd)+Z_0}\, e^{-j\omega\tau}$$

à partir de laquelle le coefficient de réflexion variable est établi, où

R(Vd) est une résistance variable en fonction de Vd qui représente l'information de commande, et
$Z_0$ est l'impédance caractéristique du milieu de propagation des signaux à corriger,
$\tau$ est ledit retard fixe qui équivaut au double du retard apporté par la première ligne à retard,

en ce que l'accès de sortie (A3) de ladite première cellule est prévu pour recevoir la superposition des ondes réfléchies par le premier et le deuxième circuit réflectif de la première cellule,
en ce qu'une deuxième des cellules de correction (15), dite à phase non minimale, a une fonction de transfert $H_{nm}(\omega)$ telle que :

$$H_{nm}(\omega) = \rho + e^{-j\omega\tau}$$

et en ce que la deuxième cellule de correction (15) comporte, inséré dans un premier accès auxiliaire (A2) d'un deuxième circuit hybride (51), un troisième circuit réflectif formé d'un deuxième circuit de désadaptation (59) présentant une réflexion variable $\Gamma_2{}'$ :

$$\Gamma_2{}' = \frac{R(Vd)-Z_0}{R(Vd)+Z_0}$$

et, inséré dans un deuxième accès auxiliaire (A4) du deuxième circuit hybride (51), un quatrième circuit réflectif formé d'une deuxième ligne à retard (61) et d'un deuxième circuit miroir (63) connectés en série, ledit quatrième circuit réflectif présentant une réflexion fixe $\Gamma_4{}'$ :

$$\Gamma_4{}' = -e^{-j\omega\tau}$$

à partir de laquelle le coefficient de réflexion variable est établi.

2. Dispositif selon la revendication 1, caractérisé en ce que lesdits deuxième et troisième circuits réflectifs contiennent une diode PIN (80).

3. Dispositif selon l'une des revendications 1 et 2, caractérisé en ce que chacun desdits premier et second circuits hybrides (50, 51) est constitué par un transformateur différentiel (70).

4. Dispositif selon l'une des revendications 1 à 3, caractérisé en ce que le circuit de mesure d'égalisation (22) est constitué par un discriminateur de fréquence (90).

5. Dispositif selon la revendication 4, caractérisé en ce que le discriminateur de fréquence (90) est formé d'un circuit intégré coopérant avec un circuit résonant (92,94).

**Patentansprüche**

1. Entzerrungsvorrichtung mit einem Eingang (1) für ein zu entzerrendes Signal, einem Ausgang (30) zum Liefern des entzerrten Signals, einer Korrekturkaskade, die den Eingang mit dem Ausgang verbindet, wobei die Kaskade aus wenigstens zwei in Kaskade geschalteten Korrekturzellen (5, 15) gebildet ist, die mittels einer Kopplungsschaltung gebildet und jeweils mit einem Steueranschluß (10, 20) versehen sind, um eine Steurinformation zu empfangen, die die vorzunehmende Korrektur bestimmt und aus einer Entzerrungsmeßschaltung (22) stammt, die zum Messen der von der Vorrichtung vorgenommenen Entzerrung bestimmt ist, dadurch gekennzeichnet, daß die Kopplungsschaltungen aus Hybridschaltungen gebildet sind, daß eine erste Zelle (5), eine sogenannte Zelle mit minimaler Phase, eine Übertragungsfunktion $H_m(\omega)$) wie folgt aufweist:

$$H_m(\omega) = 1 \, \rho \, e^{-j\omega\tau}$$

worin

   $\rho$ ein variabler Reflexionskoeffizient ist,
   $\tau$ eine festgelegte Verzögerung ist,
   und $\omega$ die Frequenz darstellt,

wobei jede Kopplungsschaltung einen Eingangszugang und einen Ausgangszugang für das zu korrigierende Signal bzw. das korrigierte Signal aufweist, daß die erste Zelle (5) in einen ersten Hilfszugang (A2) einer Hybridschaltung (50) eingefügt eine erste festgelegte Reflexionsschaltung (52), die aus einer ersten Spiegelschaltung mit einem festgelegten Reflexionskoeffizienten von $\Gamma_2 = K$ gebildet ist, und in einen zweiten Hilfszugang (A4) der ersten Hybridschaltung (50) eingefügt eine zweite Reflexionsschaltung aufweist, die aus einer ersten Verzögerungsleitung (54) und einer ersten Fehlanpassungsschaltung (56) gebildet ist, die in Reihe geschaltet sind, wobei die zweite Reflexionsschaltung eine variable Reflexion $\Gamma_4$ in Abhängigkeit von der Steuerinformation aufweist:

$$\Gamma_4 = \frac{R(Vd) - Z_0}{R(Vd) + Z_0} \, e^{-j\omega\tau},$$

von welcher ausgehend der variable Reflexionskoeffizient erstellt wird, worin

   $R(Vd)$ ein Widerstand ist, der in Abhängigkeit von Vd variabel ist, die die Steuerinformation darstellt, und $Z_0$ die charakteristische Impedanz des Fortpflanzungsmediums der zu korrigierenden Signale ist, $\tau$ die festgelegte Verzögerung ist, die der doppelten Verzögerung entspricht, die von der ersten Verzögerungsleitung verursacht wird,

daß der Ausgangszugang (A3) der ersten Zelle vorgesehen ist, um die Überlagerung der von der ersten und der zweiten Reflexionsschaltung der ersten Zelle reflektierten Wellen zu empfangen, daß eine zweite der Korrekturzellen (15), eine sogenannte Zelle mit nichtminimaler Phase, eine Übertragungsfunktion $H_{nm}(\omega)$ wie folgt aufweist:

$$H_{nm}(\omega) = \rho + e^{-j\omega\tau}$$

und daß die zweite Korrekturzelle (15) in einen ersten Hilfszugang (A2) einer zweiten Hybridschaltung (51) eingefügt eine dritte Reflexionsschaltung, die aus einer zweiten Entanpassungsschaltung (59) mit einer variablen Reflexion $\Gamma_2'$:

$$\Gamma_4' = \frac{R(Vd) - Z_0}{R(Vd) + Z_0}$$

gebildet ist, und in einen zweiten Hilfszugang (A4) der zweiten Hybridschaltung (51) eingefügt eine vierte Reflexionsschaltung aufweist, die aus einer zweiten Verzögerungsleitung (61) und einer zweiten Spiegelschaltung (63) gebildet ist, die in Reihe geschaltet sind, wobei die vierte Reflexionsschaltung eine festgelegte Reflexion $\Gamma_4'$ auf-weist:

# EP 0 476 764 B1

$$\Gamma_4' = -e^{-j\omega\tau}$$

von welcher ausgehend der variable Reflexionskoeffizient erstellt wird.

2. Vorrichtung nach Anspruch 1, dadurch gekennzeichnet, daß die zweite und die dritte Reflexionsschaltung eine PIN-Diode (80) enthalten.

3. Vorrichtung nach einem der Ansprüche 1 und 2, dadurch gekennzeichnet, daß jede der ersten und der zweiten Hybridschaltungen (50, 51) aus einem Differentialübertrager (70) gebildet ist.

4. Vorrichtung nach einem der Ansprüche 1 bis 3, dadurch gekennzeichnet, daß die Entzerrungsmeßschaltung (22) aus einem Frequenzdiskriminator (90) gebildet ist.

5. Vorrichtung nach Anspruch 4, dadurch gekennzeichnet, daß der Frequendiskriminator (90) aus einer integrierten Schaltung gebildet ist, die mit einem Resonanzkreis (92, 94) zusammenwirkt.

## Claims

1. An equalizing device consisting of an input (1) for a signal to be equalized, an output (30) for supplying an equalized signal, a correction cascade linking said input to said output, cascade being made up of at least two correction cells (5, 15) connected in cascade, which are set up from a coupling circuit and each of which has a control terminal (10, 20) for receiving control information determining the correction to be applied and emanating from an equalization measuring circuit (22) designed to measure the equalization applied by the device, said device being characterised in that the coupling circuits are made up of hybrid circuits, in that a first of the cells (5), referred to as a cell with minimal phase, has a transfer function $H_m(\omega)$ such that :

$$H_m(\omega) = 1 + \rho\, e^{-j\omega\tau}$$

where

$\rho$ is a variable reflection coefficient,
$\tau$ is a fixed delay
and $\omega$ represents the frequency,

each coupling circuit having an input port and an output port for the signal to be corrected and the corrected signal respectively, in that the first cell (5) has, inserted in a first auxiliary port (A2) of a first hybrid circuit (50), a first fixed reflective circuit (52) comprising a first mirror circuit with a fixed reflection coefficient $\Gamma_2 = K$ and, inserted in a second auxiliary port (A4) of said first hybrid circuit (50), a second reflective circuit comprising a first delay line (54) and a first mismatching circuit (56) connected in series, said second reflective circuit having a variable reflection $\Gamma_4$ as a function of the control information:

$$\Gamma_4 = \frac{R(Vd)\text{-}Z_0}{R(Vd) + Z_0}\, e^{-j\omega\tau}$$

on the basis of which the variable reflection coefficient is established, where

$R(Vd)$ is a variable resistance as a function of Vd which represents the control information and
$Z_0$ is the characteristic impedance of the propagation environment of the signals to be corrected,
$\tau$ is said fixed delay which is equal to twice the delay applied by the first delay line,

and in that the output port (A3) of said cell is provided as a means of receiving the superimposition of the waves reflected by the first and the second reflective circuit of the first cell,
in that a second of the correction cells (15), referred to as the cell with non-minimal phase, has a transfer function Hnm($\omega$) such that:

8

$$Hnm(\omega) = \rho + e^{-j\omega\tau}$$

and in that the second correction cell (15) has, inserted in a first auxiliary port (A2) of a second hybrid circuit (51), a third reflective circuit comprising a second mismatching circuit (59) having a variable reflection $\Gamma_2'$:

$$\Gamma_2' = \frac{R(Vd) - Z_0}{R(Vd) + Z_0}$$

and, inserted in a second auxiliary port (A4) of the second hybrid circuit (51), a fourth reflective circuit comprising a second delay line (61) and a second mirror circuit (63) connected in series, said fourth reflective circuit having a fixed reflection $\Gamma_4'$:

$$\Gamma_4' = -e^{-j\omega\tau}$$

on the basis of which the variable reflection coefficient is established.

2.  A device as claimed in claim 1, characterised in that said second and third reflective circuits contain a PIN diode (80).

3.  A device as claimed in one of claims 1 and 2, characterised in that each of said first and second hybrid circuits (50, 51) consists of a differential transformer (70).

4.  A device as claimed in one of claims 1 to 3, characterised in that the equalization measuring circuit (22) consists of a frequency discriminator (90).

5.  A device as claimed in claim 4, characterised in that the frequency discriminator (90) consists of an integrated circuit co-operating with a resonant circuit (92, 94).

FIG. 1

EP 0 476 764 B1

FIG. 4

FIG. 3

FIG. 2

FIG. 5